# EUROPEAN PATENT APPLICATION

(11) **EP 1 659 649 A1**
(43) Date of publication of application: **24.05.2006**
(21) Application number: 05025342.6
(22) Date of filing: 21.11.2005
(51) Int. Cl.: H01M 2/04, H01M 2/12

(54) **Battery and battery pack**

(30) Priority: 22.11.2004 JP 2004337841
(71) Applicant: NEC Corporation, Minato-ku Tokyo (JP)
(72) Inventor: Kajimura, Hideki, Kakegawa-shi Shizuoka (JP)
(74) Representative: Vossius & Partner

(57) **Abstract**

The provided battery (1) includes a sheathing can (2) housing an electrode (3) immersed in a liquid electrolyte (6); a sealing cap (7) to block an aperture formed on one end face of the sheathing can (2); an insulating plate (12a) to electrically separate the electrode (3) from the sealing cap (7); and a relief valve (9) mounted on the sealing cap (7) to discharge gas inside of the sheathing can (2) when an internal pressure in the sheathing can (2) exceeds a predetermined pressure; wherein the insulating plate (12a) includes a bottom face, a peripheral rib (13a) surrounding a peripheral portion of the bottom face and reinforcing ribs (14a) mounted on the bottom face in such a manner that the bottom is partitioned by the at least one reinforcing rib (14a), and has a plurality of divided regions defined by at least one part of the peripheral rib (13a) and the at least one reinforcing rib (14a), and wherein a notch (16) is formed on the peripheral rib (13a) and the reinforcing ribs (14a) surrounding the region located below the relief valve (9).

## Description

The present invention relates to a battery and a battery pack and more particularly to the battery and battery pack being excellent in durability, in safety for a user and in impact resistance.

The present application claims priority of Japanese Patent Application No. 2004-337841 filed on November 22, 2004, which is hereby incorporated by reference.

In recent years, popularity of a portable terminal device has increase dramatically. For designing a portable terminal device constructed on the precondition that the portable terminal device is carried with its user, various environments in which the portable terminal device is used, high durability, safety for the user and impact resistance of various components mounted in the portable terminal device must be taken into consideration.

As in the case of the portable terminal device, a battery serving as a power source of the portable terminal device requires high durability, safety and impact resistance.

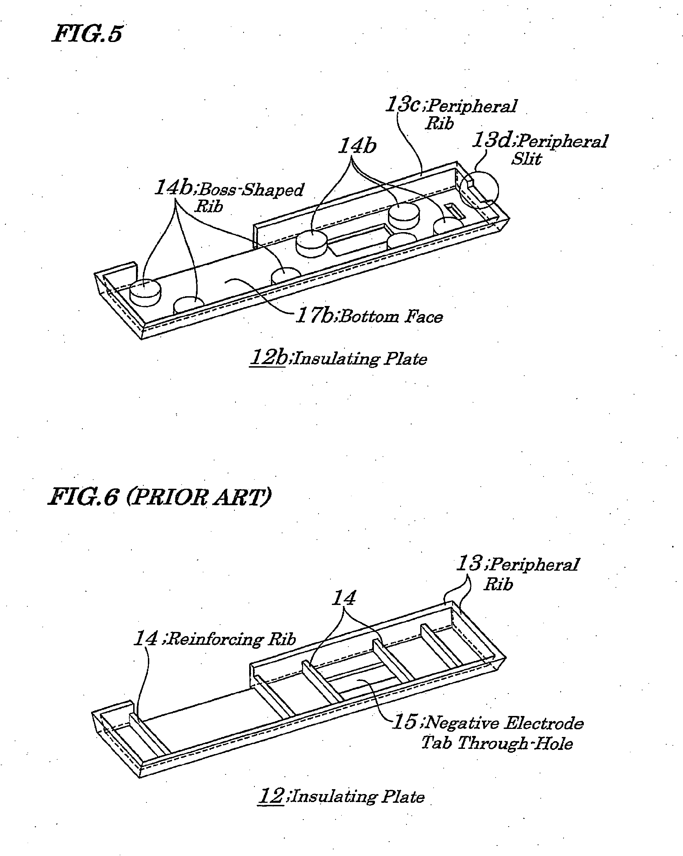

Figure 6 is a diagram showing configurations of an insulating plate 12 to be used in a conventional battery. Generally, such the battery is housed in a resin case and mounted as a "battery pack" in a portable terminal device.

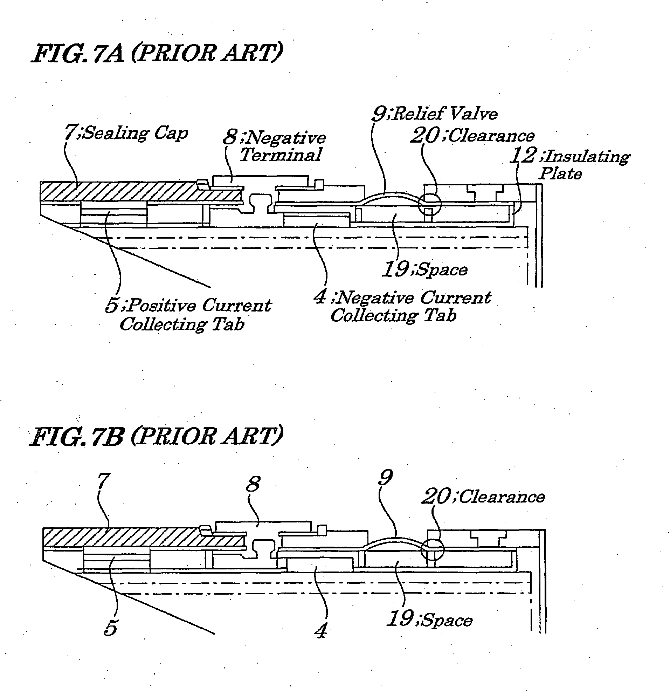

Figure 7A shows main components of the conventional battery. As shown in Fig. 7A, when an impact is delivered to a side of a negative electrode terminal 8, in reaction to the shock, an electrode-rolled body moves little by little and is pressed to a side of a sealing cap 7. To the insulating plate 12 are attached a peripheral rib 13 and reinforcing ribs 14 used to prevent deformation of the insulating plate 12. If the electrode-rolled body is pressed strongly, the insulating plate 12 is also pressed and deformed, causing the electrode-rolled body to come into full contact with the sealing cap 7.

When the insulating plate 12 is deformed, as shown in Fig. 7B, a liquid electrolyte floods, in a rounding manner, into a clearance 20 between the deformed insulating plate 12 and sealing cap 7, causing a space 19 surrounded by the reinforcing ribs 14 mounted in a region located immediately below a relieve valve 9 to be in a closed state.

If a pressure is applied further in this state, the relief valve 9 is pressed from the inside by pressure of gas in the space 19 and the relief valve 9 acts to cause the liquid electrolyte to leak outside of the case.

As conventional technology of a battery, a "closed-type battery" disclosed in JP-A-2000-277081 can be referred to.

However, the conventional technology has a problem. That is, a purpose of the invention disclosed in JP-A-2000-277081 is to prevent a thin film blocking a gas discharging port from getting ripped, in which no measures are taken against the shock acting on the insulating plate that separates a sealing cap from a power generating unit. Therefore, in the disclosed technology, when a shock force acts on an insulating plate, even if the thin film to block the gas discharging port does not get ripped, there is a possibility that the insulating plate is broken, thus causing the battery not to function.

Thus, conventionally, a battery having high shock resistance is not yet provided.

In view of the above, it is an object of the present invention to provide a battery and battery pack having high durability, high safety for a user and high impact resistance.

According to a first aspect of the present invention, there is provided a battery including:
a sheathing can housing an electrode immersed in a liquid electrolyte;
a sealing cap to block an aperture formed on one end face of the sheathing can;
an insulating plate to electrically separate the electrode from the sealing cap; and
a relief valve mounted on the sealing cap to discharge gas inside of the sheathing can when an internal pressure in the sheathing can exceeds a predetermined pressure; and
wherein the insulating plate includes a bottom face, a peripheral rib approximately surrounding a peripheral portion of the bottom face and at least one reinforcing rib mounted on the bottom face in such a manner that the bottom is partitioned by the at least one reinforcing rib, and has a plurality of divided regions defined by at least one part of the peripheral rib and the at least one reinforcing rib, and wherein a notch is formed on at least one portion of at least one part of the peripheral rib and the at least one reinforcing rib surrounding the region located immediately below the relief valve.

In the foregoing, a preferable mode is one wherein an air ventilating opening is formed on the bottom face of the insulating plate in a region located immediately below the relief valve.

Also, another preferable mode is one wherein the sheathing can includes an approximately cubic container with a closed bottom end.

Also, still another preferable mode is one wherein the sheathing can includes an approximately cylindrical container with a closed bottom end.

According to a second aspect of the present invention, there is provided a battery including:
a sheathing can housing an electrode immersed in a liquid electrolyte;
a sealing cap to block an aperture formed on one end face of the sheathing can;
an insulating plate to electrically separate the electrode from the sealing cap; and
a relief valve mounted on the sealing cap mounted on the sealing cap to discharge gas inside of the sheathing can when an internal pressure in the sheathing can exceeds a predetermined pressure, and
wherein the insulating plate includes a bottom face, a peripheral rib approximately surrounding a peripheral portion of the bottom face and at least one reinforcing rib mounted on the bottom face, in such a manner that the bottom is not partitioned into a plurality of regions by the at least one reinforcing rib.

In the foregoing, a preferable mode is one wherein an air ventilating opening is formed on the bottom face of the insulating plate and below the relief valve.

According to a third aspect of the present invention, there is provided a battery including:
a sheathing can housing an electrode immersed in a liquid electrolyte;
a sealing cap to block an aperture formed on one end face of the sheathing can;
an insulating plate to electrically separate the electrode from the sealing cap; and
a relief valve mounted on the sealing cap mounted on the sealing cap to discharge gas inside of the sheathing can when an internal pressure in the sheathing can exceeds a predetermined pressure, and
wherein the insulating plate includes a bottom face, a peripheral rib approximately surrounding a peripheral portion of the bottom face and a plurality of reinforcing ribs are formed on the bottom face in a meandering manner.

According to a fourth aspect of the present invention, there is provided a battery pack housing at least one battery,
wherein the battery includes:
a sheathing can housing an electrode immersed in a liquid electrolyte;
a sealing cap to block an aperture formed on one end face of the sheathing can;
an insulating plate to electrically separate the electrode from the sealing cap; and
a relief valve mounted on the sealing cap to discharge gas inside of the sheathing can when an internal pressure in the sheathing can exceeds a predetermined pressure; and
wherein the insulating plate includes a bottom face, a peripheral rib approximately surrounding a peripheral portion of the bottom face and at least one reinforcing rib mounted on the bottom face in such a manner that the bottom is partitioned by the at least one reinforcing rib, and has a plurality of divided regions defined by at least one part of the peripheral rib and the at least one reinforcing rib, and wherein a notch is formed on at least one portion of at least one part of the peripheral rib and the at least one reinforcing rib surrounding the region located immediately below the relief valve.

According to a fifth aspect of the present invention, there is provided a battery pack housing at least one battery,
wherein the battery includes:
a sheathing can housing an electrode immersed in a liquid electrolyte;
a sealing cap to block an aperture formed on one end face of the sheathing can;
an insulating plate to electrically separate the electrode from the sealing cap; and
a relief valve mounted on the sealing cap mounted on the sealing cap to discharge gas inside of the sheathing can when an internal pressure in the sheathing can exceeds a predetermined pressure, and
wherein the insulating plate includes a bottom face, a peripheral rib approximately surrounding a peripheral portion of the bottom face and at least one reinforcing rib mounted on the bottom face, in such a manner that the bottom is not partitioned into a plurality of regions by the at least one reinforcing rib.

According to a sixth aspect of the present invention, there is provided a battery pack housing at least one battery,
wherein the battery includes:
a sheathing can housing an electrode immersed in a liquid electrolyte;
a sealing cap to block an aperture formed on one end face of the sheathing can;'
an insulating plate to electrically separate the electrode from the sealing cap; and
a relief valve mounted on the sealing cap mounted on the sealing cap to discharge gas inside of the sheathing can when an internal pressure in the sheathing can exceeds a predetermined pressure, and
wherein the insulating plate includes a bottom face, a peripheral rib approximately surrounding a peripheral portion of the bottom face and a plurality of reinforcing ribs are formed on the bottom face in a meandering manner.

With the above configuration, it is possible to provide the battery and battery pack having high durability, high safety for a user and high impact resistance.

The above and other objects, advantages, and features of the present invention will be more apparent from the following description taken in conjunction with the accompanying drawings
in which:
Fig. 1 is a diagram showing configurations of a battery according to a first embodiment of the present invention;
Fig. 2 is a diagram showing configurations of an insulating plate making up the battery according to the first embodiment;
Fig. 3A is a diagram showing a state in which no shock force has acted on the battery and Fig. 3B is a diagram showing a state in which a shock force has acted on the battery according to the first embodiment of the present invention;
Fig. 4 is a diagram showing the state in which the shock force has acted on the battery according to the first embodiment of the present invention;
Fig. 5 is a diagram showing configurations of an insulating plate making up a battery according to a second embodiment of the present invention;
Fig. 6 is a diagram showing configurations of an insulating plate used in a conventional battery;
Fig. 7A is a diagram showing a state of space located immediately below a relief valve before a shock acts on the conventional battery and Fig. 7B is a diagram showing a state of the space located immediately below the relief valve after the shock has acted, in which the space is put into a closed state;

Best modes of carrying out the present invention will be described in further detail using various embodiments with reference to the accompanying drawings.

### First Embodiment

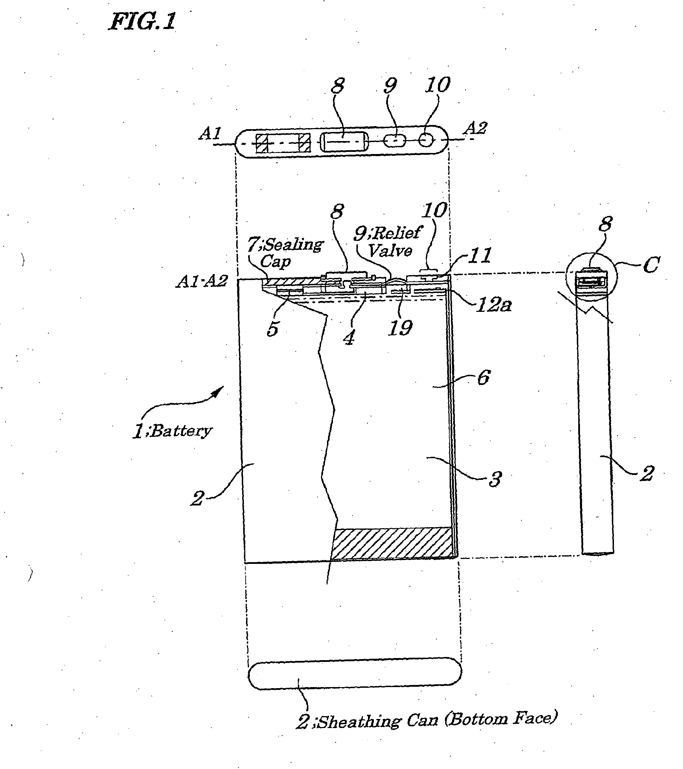

Figure 1 is a diagram showing configurations of a battery 1 according to a first embodiment of the present invention. As shown in Fig. 1, the battery 1 includes a sheathing can 2, an electrode-rolled body 3, a negative current collecting tab 4, a positive current collecting tab 5, a liquid electrolyte 6, a sealing cap 7, and an insulating plate 12a.

The sheathing can 2 is made of metal such as aluminum and has watertightness to prevent the sealed-in liquid electrolyte 6 from leaking. The electrode-rolled body 3 is obtained by winding a negative electrode and positive electrode with a separator (not shown) being interposed between the negative and positive electrode and by crushing the wound electrodes to form a flat shape. The negative current collecting tab 4 is a conductor drawn from a terminal of a negative electrode 8 making up the electrode-rolled body 3 and the positive current collecting tab 5 is a conductor drawn from a terminal of the positive electrode making up the electrode-rolled body 3. The liquid electrolyte 6 is a liquid containing an ion of lithium or a like. The sealing cap 7 is a cap member to block an aperture formed on one terminal face of the sheathing can 2. In the sealing cap 7 are mounted the negative electrode 8, a relief valve 9, an injection port 10, and sealing pin 11. The negative electrode 8 is mounted in an approximately central portion of an aperture of the sheathing can 2. The relief valve 9 is used to lower pressure inside of the sheathing can 2 of the battery 1 when it builds up abnormally due to abnormal environments and/or a stress from the outside. The injection port 10 is a port through which the liquid electrolyte 6 is injected after the sheathing can 2 has been put into a hermetically sealed state. The sealing pin 11 is a member to block the injection port 10 after the liquid electrolyte 6 has been injected.

The insulating plate 12a is placed so that the electrode-rolled body 3 is electrically separated from the sealing cap 7. The insulating plate 12a also serves as a spacer to keep the electrode-rolled body 3 and sealing cap 7 at a constant distance.

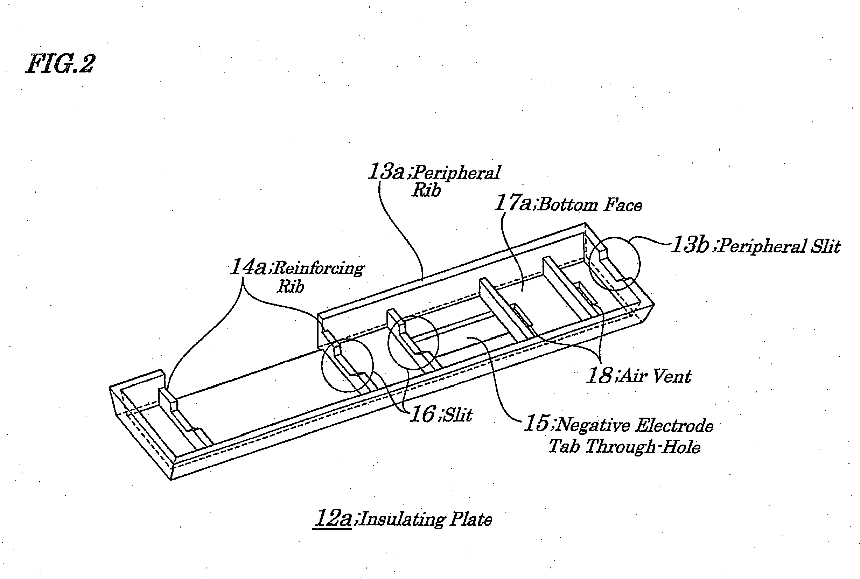

Figure 2 is a diagram showing configurations of the insulating plate 12a making up the battery 1 according to the first embodiment. The insulating plate 12a includes a peripheral rib 13a, a plurality of reinforcing ribs 14a, and a negative electrode tab through-hole 15. Each of the reinforcing ribs 14a mounted in a region located immediately below the relief valve 9 has a plurality of slits 16 and on the bottom face 17a of the insulating plate 12a is formed air vents 18. To the peripheral rib 13a is formed a peripheral slit 13b so that space 19 formed in a region located immediately below the relief valve 9 is not put into a sealed state. Since the formation of the slits 16 on the reinforcing ribs 14a causes a decrease in stiffness, it is preferable that the peripheral rib 13a is larger in size than a conventional reinforcing rib 14a (Fig. 6).

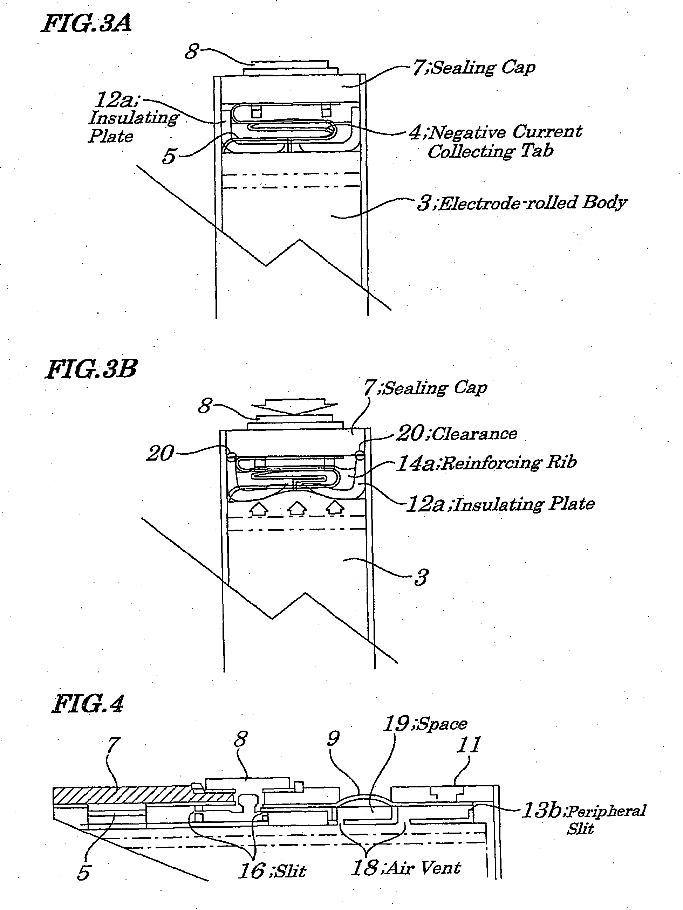

Figure 3 shows configurations of the main component (portion "C" surrounded by a circle in Fig. 1) of the battery 1. As shown in Fig. 3A, ordinarily, the electrode-rolled body 3 and the sealing cap 7 are kept by the insulating plate 12a at a constant distance.

When a shock force acts on the battery 1 according to the first embodiment, as in the case of the conventional battery, in reaction to the shock force, the electrode-rolled body 3 moves little by little and is pressed on the sealing cap 7 side. However, neither deformation nor breakage occur readily due to improvements achieved by the acts of the peripheral rib 13a and the reinforcing ribs 14a.

If a force exceeding stiffness of the insulating plate 12a acts on the battery 1 when the electrode-rolled body 3 is pressed, the insulating plate 12a is pressed and deformed, causing the electrode-rolled body 3 to be fully contacted with the sealing cap 7. When the insulating plate 12a is deformed as shown in Fig. 3B, the liquid electrolyte 6 flows, in a rounding manner, into a clearance 20.

Moreover, as shown in Fig. 2, the reinforcing ribs 14a mounted in a region located immediately below the relief valve 9 has the slits 16 and the air vents 18 are formed on the bottom face 17a of the insulating plate 12a. Also, the peripheral rib 13a has a peripheral slit 13b. As a result, even if the insulating plate 12a comes into full contact with the sealing cap 7, as shown in Fig. 4, the space 19 is not put into a sealed state and the relief valve 9 operates to prevent the liquid electrolyte 6 from leaking.

Therefore, with the battery 1 according the first embodiment being housed in a resin case, durability and impact resistance are improved.

As described above, according to the battery 1 according to the first embodiment, even with a shock acting on the battery due to any happenstance, leaking of the liquid electrolyte sealed hermetically therein does not occur.

### Second Embodiment

Figure 5 is a diagram showing configurations of an insulating plate to be used in a battery according to a second embodiment of the present invention. As shown in Fig. 5, a plurality of boss-shaped ribs 14b is mounted on an insulating plate 12b. The insulating plate 12b is so configured that the boss-shaped ribs 14b come into contact with a peripheral rib 13c at one place at the most. In other words, the boss-shaped ribs 14b are so configured as not to partition a bottom face 17b of the insulating plate 12b. As a result, a meander-like space 19 is formed between the bottom of the insulating plate 12b and a sealing cap 7.

When a shock force acts on the battery of the second embodiment, as in the case of the conventional battery, in reaction to the shock force, an electrode-rolled body 3 moves little by little and is pressed to the sealing cap 7 side. When the electrode-rolled body 3 is pressed, the insulating plate 12b is also pressed and deformed, causing the electrode-rolled body 3 to come into full contact with the sealing cap 7. With the insulating plate 12b deformed, a liquid electrolyte 6 floods, in a rounding manner, into a clearance 20 between the deformed insulating plate 12b and sealing cap 7.

In addition to the configuration having the meander-like space 19, the air vent 18 is formed partially at the bottom face 17b of the insulating plate 12b and a peripheral slit 13d is formed on the peripheral rib 13c and, therefore, even if the insulating plate 12b comes into full contact with the sealing cap 7, the space 19 is not put into a closing state, thus making it possible to activate a relief valve 9 in order to prevent leaking of the liquid electrolyte 6.

Thus, with the battery 1 according to the second embodiment being housed in a resin case, durability and impact resistance are improved.

Furthermore, according to the battery of the second embodiment, even with a shock acting on the battery due to any happenstance, leaking of the liquid electrolyte sealed hermetically therein can be prevented.

It is apparent that the present invention is not limited to the above embodiments but may be changed and modified without departing from the scope of the invention. For example, in the above embodiments, the sheathing can is made up of an approximately, cubic box body with a closed bottom end, however, the can may be made up of an approximately cylindrical box body with a closed bottom end or of an approximately multi-prism bearing a bottom, an approximately polygonal box body with a closed bottom end, or a like.

## Claims

1. A battery (1) **characterized by** comprising:
a sheathing can (2) housing an electrode (3) immersed in a liquid electrolyte (6);
a sealing cap (7) to block an aperture formed on one end face of said sheathing can (2);
an insulating plate (12a) to electrically separate said electrode (3) from said sealing cap (7); and
a relief valve (9) mounted on said sealing cap (7) to discharge gas inside of said sheathing can (2) when an internal pressure in said sheathing can (2) exceeds a predetermined pressure; and
wherein said insulating plate (12a) includes a bottom face, a peripheral rib (13a) approximately surrounding a peripheral portion of said bottom face and at least one reinforcing rib (14a) mounted on said bottom face in such a manner that said bottom is partitioned by said at least one reinforcing rib (14a), and has a plurality of divided regions defined by at least one part of said peripheral rib (13a) and said at least one reinforcing rib (14a), and wherein a notch (16) is formed on at least one portion of at least one part of said peripheral rib (13a) and said at least one reinforcing rib (14a) surrounding the region located immediately below said relief valve (9).

2. The battery (1) according to Claim 1, wherein an air ventilating opening is formed on said bottom face of said insulating plate (12a) in a region located immediately below said relief valve (9).

3. A battery (1) **characterized by** comprising:
a sheathing can (2) housing an electrode (3) immersed in a liquid electrolyte (6);
a sealing cap (7) to block an aperture formed on one end face of said sheathing can (2);
an insulating plate (12b) to electrically separate said electrode (3) from said sealing cap (7); and
a relief valve (9) mounted on said sealing cap (7) mounted on said sealing cap (7) to discharge gas inside of said sheathing can (2) when an internal pressure in said sheathing can (2) exceeds a predetermined pressure, and
wherein said insulating plate (12b) includes a bottom face, a peripheral rib (13b) approximately surrounding a peripheral portion of said bottom face and at least one reinforcing rib (14b) mounted on said bottom face, in such a manner that said bottom is not partitioned into a plurality of regions by said at least one reinforcing rib (14b).

4. The battery (1) according to Claim 3, wherein an air ventilating opening is formed on the bottom face of said insulating plate (12b) and below said relief valve (9).

5. A battery (1) **characterized by** comprising:
a sheathing can (2) housing an electrode (3) immersed in a liquid electrolyte (6);
a sealing cap (7) to block an aperture formed on one end face of said sheathing can (2);
an insulating plate (12b) to electrically separate said electrode (3) from said sealing cap (7); and
a relief valve (9) mounted on said sealing cap (7) mounted on said sealing cap (7) to discharge gas inside of said sheathing can (2) when an internal pressure in said sheathing can (2) exceeds a predetermined pressure, and
wherein said insulating plate (12b) includes a bottom face, a peripheral rib (13b) approximately surrounding a peripheral portion of said bottom face and a plurality of reinforcing ribs (14b) are formed on said bottom face in a meandering manner.

6. The battery (1) according to any one of claims 1 to 5, wherein said sheathing can (2) comprises an approximately cubic container with a closed bottom end.

7. The battery (1) according to any one of claims 1 to 5, wherein said sheathing can (2) comprises an approximately cylindrical container with a closed bottom end.

8. A battery pack housing at least one battery (1), wherein the battery (1) comprises:
a sheathing can (2) housing an electrode (3) immersed in a liquid electrolyte (6);
a sealing cap (7) to block an aperture formed on one end face of said sheathing can (2);
an insulating plate (12a) to electrically separate said electrode (3) from said sealing cap (7); and
a relief valve (9) mounted on said sealing cap (7) to discharge gas inside of said sheathing can (2) when an internal pressure in said sheathing can (2) exceeds a predetermined pressure; and
wherein said insulating plate (12a) includes a bottom face, a peripheral rib (13a) approximately surrounding a peripheral portion of said bottom face and at least one reinforcing rib (14a) mounted on said bottom face in such a manner that said bottom is partitioned by said at least one reinforcing rib (24a), and has a plurality of divided regions defined by at least one part of said peripheral rib (13a) and said at least one reinforcing rib (14a), and wherein a notch (16) is formed on at least one portion of at least one part of said peripheral rib (13a) and said at least one reinforcing rib (14a) surrounding the region located immediately below said relief valve (9).

9. A battery pack housing at least one battery (1), wherein the battery (1) comprises:
a sheathing can (2) housing an electrode (3) immersed in a liquid electrolyte (6);
a sealing cap (7) to block an aperture formed on one end face of said sheathing can (2);
an insulating plate (12b) to electrically separate said electrode (3) from said sealing cap (7); and
a relief valve (9) mounted on said sealing cap (7) mounted on said sealing cap (7) to discharge gas inside of said sheathing can (2) when an internal pressure in said sheathing can (2) exceeds a predetermined pressure, and
wherein said insulating plate (12b) includes a bottom face, a peripheral rib (13b) approximately surrounding a peripheral portion of said bottom face and at least one reinforcing rib (14b) mounted on said bottom face, in such a manner that said bottom is not partitioned into a plurality of regions by said at least one reinforcing rib (14b).

10. A battery pack housing at least one battery (1), wherein the battery (1) comprises:
a sheathing can (2) housing an electrode (3) immersed in a liquid electrolyte (6);
a sealing cap (7) to block an aperture formed on one end face of said sheathing can (2);
an insulating plate (12b) to electrically separate said electrode (3) from said sealing cap (7); and
a relief valve (9) mounted on said sealing cap (7) mounted on said sealing cap (7) to discharge gas inside of said sheathing can (2) when an internal pressure in said sheathing can (2) exceeds a predetermined pressure, and
wherein said insulating plate (12b) includes a bottom face, a peripheral rib (13b) approximately surrounding a peripheral portion of said bottom face and a plurality of reinforcing ribs (14b) are formed on said bottom face in a meandering manner.
